Europäisches Patentamt

European Patent Office

Office européen des brevets

(19)

(11) Publication number: **0 058 165**
**B1**

# (12) EUROPEAN PATENT SPECIFICATION

(45) Date of publication of patent specification: **30.07.86**

(21) Application number: **81902099.1**

(22) Date of filing: **26.06.81**

(86) International application number:
**PCT/US81/00882**

(87) International publication number:
**WO 82/00630 04.03.82 Gazette 82/07**

(51) Int. Cl.⁴: **B 66 C 1/32,** B 60 P 3/40

(54) **LOAD SKIDDING VEHICLE.**

(30) Priority: **20.08.80 PCt/us80/01073**

(43) Date of publication of application:
**25.08.82 Bulletin 82/34**

(45) Publication of the grant of the patent:
**30.07.86 Bulletin 86/31**

(84) Designated Contracting States:
**FR GB SE**

(56) References cited:
**US-A-2 903 294
US-A-3 005 894
US-A-3 034 821
US-A-3 263 834
US-A-3 549 031
US-A-3 627 351
US-A-3 631 995
US-A-3 767 075
US-A-3 782 567
US-A-3 907 137
US-A-3 952 890
US-A-4 140 233
US-A-4 217 076**

(73) Proprietor: **CATERPILLAR TRACTOR CO.**
**100 Northeast Adams Street**
**Peoria Illinois 61629 (US)**

(72) Inventor: **MEISEL, Thomas C., Jr.**
**3211 W. Wilshire Drive**
**Peoria, IL 61614 (US)**
Inventor: **YORK, Lyle E.**
**1016 E. Brookhill Road**
**Peoria, IL 61615 (US)**

(74) Representative: **Jackson, Peter Arthur**
**GILL JENNINGS & EVERY 53-64 Chancery Lane**
**London WC2A 1HN (GB)**

EP 0 058 165 B1

Courier Press, Leamington Spa, England.

## Description

This invention relates to a log-skidding vehicle of the type having a log-engaging grapple.

In certain classes of hauling operations, such as moving harvested trees from their felling point to a collection point, there is often no feasible means of transporting a load other than by dragging it behind a vehicle. This is generally accomplished either by attaching the load to a load-skidding vehicle with a cable or by grasping the load with a grapple suspended from an elevated support boom borne by the vehicle.

The prime disadvantage of existing commercial grapple skidders as opposed to cable skidders is that design structures of the former necessitate that the grapple be pivotally connected to its support boom at a pivot point with a transverse pivoted axis appreciably above and behind the rear axle of the skidder. This results in the load being borne by the vehicle at this pivot point, this being the first point through which the load passes which is also rigidly connected to the skidding vehicle. This loading imposed upon the skidding vehicle may be described by a load vector having essentially two components both of which pass through the support boom-grapple pivot point. The first, rearwardly directed from and parallel to the longitudinal axis of the skidding vehicle, is the force required to overcome friction between the load and the ground across which it is skidded. The second, vertical and downwardly directed, is that portion of the weight of the load borne by the grapple.

As this load vector passes through a rearwardly extended elevated position, a substantial overturning moment exists about the rearmost ground contacting point of a loaded skidding vehicle. Consequently, current grapple skidders lose maneuverability when skidding a load. For those grapple skidders including a plurality of axles, the rearmost axle will suffer disproportionately great loading. Moreover, aside from the reduction in maneuverability there is a relatively low limit on the size of the load that can be carried with a grapple skidder. In some instances a load easily handled by a cable skidder will, if attempted with a grapple skidder of equivalent power, lift the front of the grapple skidder from the ground.

Efforts have previously been made toward the solution of these problems. One scheme, as described in US—A—4140233 involves the use of a force applying arm attached to the vehicle for applying a downward force on the load at a point rearwardly located from the grapple. Activating the arm provides a reactive force tending to equalize the weight distribution on the axles of the vehicle. The grapple also includes a rotator for rotating grapple arms about a substantially vertical axis for positioning the arms.

Another scheme is disclosed in US—A—3 746 193, wherein rearward swinging of the grapple assembly is controlled by fastening a cable from the boom supported grapple to the vehicle such that the cable may be placed in tension under load conditions and made slack under no load conditions. This results in the horizontal load component being primarily carried by the cable although still appreciably above the rear axle of the vehicle, thereby lowering the load vector and consequently decreasing, albeit slightly, the distance or moment arm from the rearmost point of skidder-ground contact to the load vector. Decreasing the moment arm decreases the overturning moment resulting in increased stability. Among the disadvantages of this advance are the need to include a winch on the skidding vehicle and the difficulties presented in achieving free rotation of the grapple about its vertical axis, when positioning the grapple for picking up a log, owing to the attached cable.

Another problem that is common in conventional grapple type log-skidding vehicles is that they permit free swinging movement of the grapple when the vehicle is travelling without a load. This movement of the grapple about its pivot point with the boom is often severe enough for the grapple to come in contact with some portion of the vehicle, occasionally resulting in damage. A means of preventing this involves snubbing the grapple to the back of the skidding vehicle by means of a cable and winch assembly. Such a scheme is set forth in US—A—3907137. The significant disadvantages of this development are the necessity for a winch and a potentially obstructing cable.

US—A—3627351 discloses a log-skidding vehicle of the kind (hereinafter referred to as of the kind described) having a chassis; a support assembly including both a rearwardly projecting boom pivotally mounted at the rear of the chassis about at least one axis extending transversely of the vehicle, and first hydraulic cylinder means, whereby the rear end of the boom may be raised or lowered upon actuation of the first hydraulic cylinder means; a grapple assembly depending from the rear end of the boom and having a vertical extender which is pivotally connected thereto about an axis extending transversely of the vehicle, the grapple assembly comprising a pair of arms which are capable of grasping the end of a log lying on the ground and extending rearwardly from the rear end of the vehicle and raising the end of the log upon raising of the rear end of the boom and thereupon of holding the end of the log in a position behind and substantially level with an axle of a rear wheel of the vehicle for skidding; and second hydraulic cylinder means for swinging the grapple assembly to and fro about the pivotal connection to the rear end of the boom; the first and second hydraulic cylinder means being hydraulically lockable in position whereby the grapple assembly may be held rigid relatively to the vehicle chassis during skidding. Manoeuverability of the grapple arms is however limited.

In accordance with the invention, a log-skidding vehicle of the kind described is characterized in that the grapple assembly includes a rotator for

2

rotating the arms relatively to the boom about the longitudinal centre line of the pair of arms; and in that the rotator, and hence also the arms, are pivotally connected, about an axis extending longitudinally of the vehicle, to the vertical extender.

With this arrangement, the vertical and horizontal components of the load can be made to pass closely to, or even through, the rear axle of the vehicle, thereby minimising overturning movements and dramatically increasing load-handling capacity. The rotator and pivotal movement about the longitudinal axis of the vehicle give the grapple assembly great manoeuverability for positioning the arms in position to pick up a log which is not lying along the central longitudinal axis of the vehicle.

The invention will now be explained in more detail with reference to the accompanying drawings, in which:—

Figure 1 is a side view of a log-skidding vehicle showing a load control mechanism embodying the present invention mounted on a parallelogram type grapple support assembly;

Figure 2 is a partial top view of the load skidding vehicle and load control mechanism corresponding to Figure 1;

Figure 3 is a partial side view of a load skidding vehicle with a load control mechanism showing forward rotation of a grapple owing to extension of the control cylinder;

Figure 4 is a partial side view of a load skidding vehicle with a load control mechanism showing rearward rotation of the grapple owing to retraction of the control cylinder;

Figure 5 is a partial side view of the load skidding vehicle of Figure 4 showing downward movement of the grapple due to the extension of boom cylinder 46;

Fig. 6 is a partial side view of the load skidding vehicle of Fig. 5 showing rearward movement of the grapple due to the extension of arch cylinder 30; and

Fig. 7 is a side view of a load skidding vehicle having a load control mechanism embodying the present invention mounted on an A-frame type grapple support assembly.

Fig. 8 is a side view of an additional embodiment of the present invention shown mounted on an A-frame type grapple support assembly.

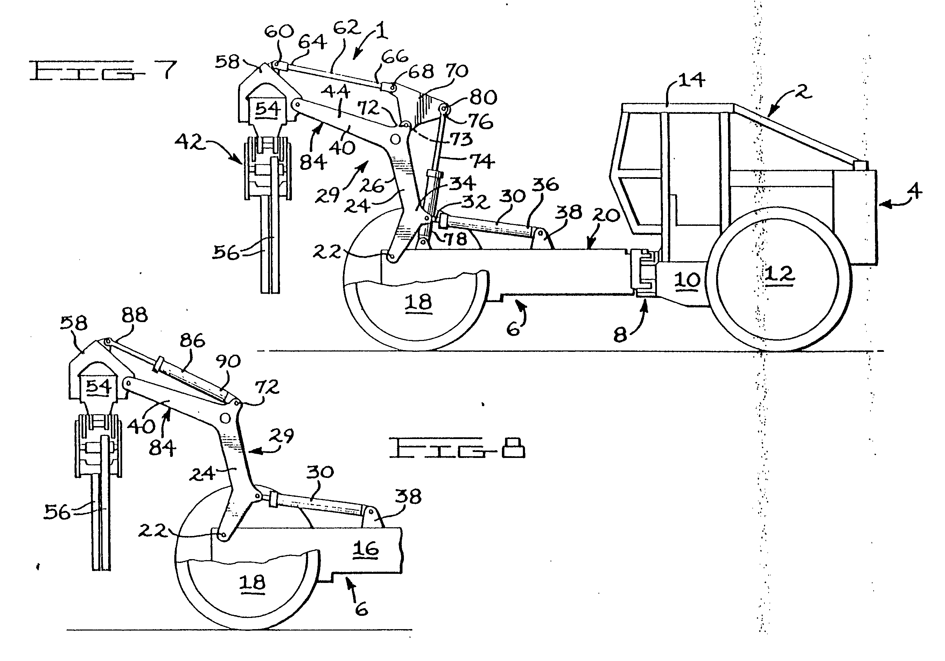

Referring to Fig. 7, a load control mechanism embodying the principle of the present invention is generally indicated by the reference numeral 1 and is mounted on a load skidding vehicle 2 commonly known as a "log skidder". The skidder 2 is articulated, having a front end 4 and a rear end 6 joined by a multiple axis pivotal connection 8. The front end 4 has a chassis 10 and mounted thereon are a wheel assembly 12, power providing means (not shown) and an operator's station 14 containing controls (not shown) for operating the skidding vehicle 2.

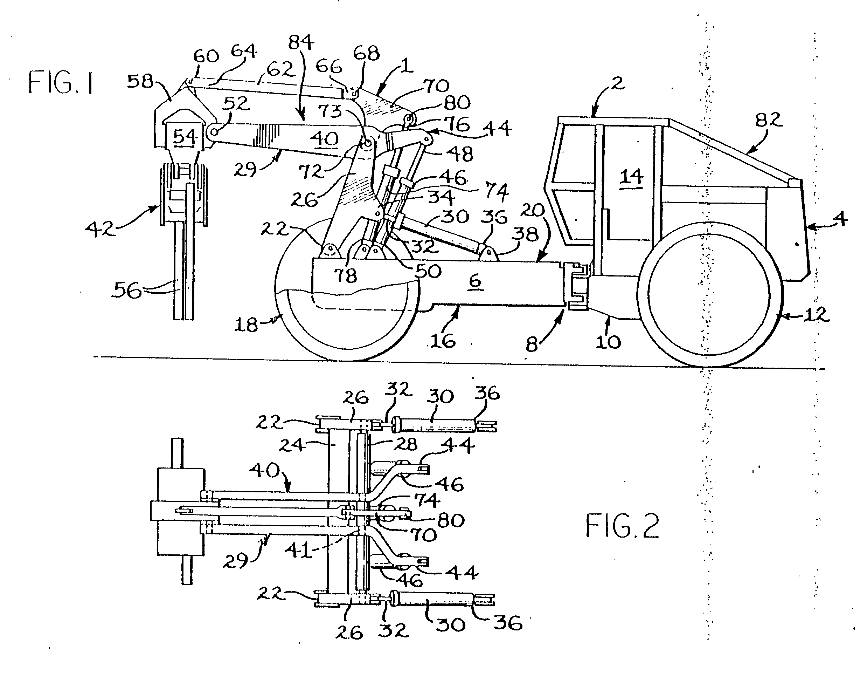

The rear end 6 has a chassis 16 on which are mounted a wheel assembly 18 and a mounting frame 20. Mounted on the mounting frame 20 is a support assembly such as grapple support assembly 29 which is preferably of the "A-frame" type as shown in Fig. 7. Alternatively, as shown in Figs. 1—6, a "parallelogram" type grapple support assembly 29 may be used. These differ from one another in a manner well known by those skilled in the art. Vehicles 2 incorporating each of these types of grapple support 29 will be discussed concurrently, as they are very similar. Where there are differences, these differences will be noted.

The grapple support assembly 29 is attached by twin pivotal connections 22 to the rear of mounting frame 20. This support assembly 29 includes a U-shaped arch 24 having two arch legs 26 and a crossmember 28 (not shown on Fig. 7) connecting these legs 26. The arch 24 is the main support for a boom assembly 84. Each arch leg 26 ends at its respective pivotal connection 22. An arch cylinder 30 is pivotally attached at a first end 32 to an intermediate point 34 of each arch leg 26. A second end 36 of each arch cylinder 30 is pivotally connected to one of two forward points 38 on the mounting frame 20, so located that the arch cylinders 30 are substantially parallel. The extension of the arch cylinders 30 may be controllably increased or decreased by means well known in the art so as to cause the arch 24 to pivot about its two pivotal connections 22.

In the "parallelogram"-type grapple support 29, a boom 40 is pivotally connected along a pivotal axis 41 to the crossmember 28 of the arch 24. In the "A-frame" type grapple support 29, the boom 40 is rigidly attached to the crossmember 28. The boom 40 extends rearwardly from the arch 24 for supporting a grasping device such as grapple assembly 42 and includes two boom arms 44 which extend rearwardly from the arch 24.

In the parallelogram type grapple support 29, a pair of boom cylinders 46, each having a first end 48 and a second end 50, are pivotally connected by their first ends 48 to the bottom 40 and by their second ends 50 to the mounting frame 20 such that the two boom cylinders 46 are substantially parallel. The length of the boom cylinders 46 may be controllably increased or decreased by means well known in the art so as to cause the boom 40 to pivot about its connection on the crossmember 28.

Pivotally attached at a rear pivot point 52 on the aftmost portion of the boom 40 is the grapple assembly 42. The grapple assembly 42 includes a rotator 54 for rotatably positioning the grapple assembly 42, grapple arms 56 depending from the rotator 54 for grasping loads, a vertical extender 58 attached to the rotator 54, and means (not shown) for controllably opening and closing the grapple arms 56. The rear pivot point 52 passes through the vertical extender 58.

The vertical extender 58 is pivotally attached to the uppermost portion of the grapple assembly 42 so as to allow the grapple assembly 42 to rotate with respect to the vertical extender 58 along an axis parallel to the longitudinal axis of the load skidding vehicle 2. A pivot point 60 for a con-

necting member 62 is located on the vertical extender 58 a distance above the rear pivot point 52. This distance must be sufficiently great as to allow the force applied through the connecting member 62 to create a moment about the rear pivot point 52 sufficient to counter the opposite moment induced by a skidded load without allowing appreciable pivotal movement of the grapple 42 about the rear pivot point 52.

The connecting member 62 is connected at a first end 64 to pivot point 60 and at a second end 66 to a pivot point 68. Connecting member 62 must be of sufficient rigidity to withstand the compressive loading necessary to counter the moment of the load vector. It is additionally beneficial to orient pivot points 60 and 68 with respect to the rear pivot point 52 and the arch 24-boom 40 connection such that these four points approximately define the corners of a parallelogram.

At pivot point 68 the connecting member 62 is attached to an upper aft portion of an equalizing link 70. The equalizing link 70 has a lower central point 73 at which it is connected to an upper central point 72 of the crossmember 28. A hydraulic control cylinder 74, having a first end 76 and a second end 78, is pivotally connected by its first end 76 to a central forward point 80 on the equalizing link 70. The equalizing link 70 has the function of rigidly maintaining the distances between the pivots at 68, 72 and 80 such that with the arch 24 locked in position (and consequently point 72 is locked since point 72 is fixedly attached to arch 24) a force may be transmitted from the control cylinder 74 to the connecting member 62.

The control cylinder 74 is pivotally attached at its second end 78 to the mounting frame 20 so that it lies in a vertical plane passing through the longitudinal axis of the load skidding vehicle 2. Means (not shown) well known in the art is provided for operating the control cylinder 74 such that the distance from the first end 76 of the control cylinder 74 to the second end 78 may be increased, decreased, maintained at a set length or permitted to float (that is, to vary with minimal resistance). Like means is included for controlling the boom cylinders 46 and the arch cylinders 30.

It is apparent from the above described embodiments that the present invention could also comprise a fluid jack 86 connected immediately intermediate the vertical extender 56 and the grapple support 21. Such an embodiment is shown in Fig. 8. The fluid jack 86 has first and second ends 88, 90, and is connected by the first end 88 to the vertical extender 56 and by the second end 90 to the upper central point 72 of the crossmember 28.

Industrial Applicability

The present invention provides a solution to the difficulties inherent to load skidding vehicles with freely pivotable load engaging means. The present invention provides means for permitting the grasping device-boom 40 combination, for the purposes of skidding operations, to be made equivalent to a single rigid member. The load vector will then pass through a point lower than the rear pivot point 52 resulting in a smaller moment about the rear wheel assembly 18 consequently yielding a more even distribution of the load between the axles of the load skidding vehicle 2.

In the preferred embodiment of this invention selective immobilization of the grapple 42 with respect to the boom 40 is achieved by fixing in relation to the work vehicle 2 two separated points 52, 60 on the grapple assembly 42. While fixing the location of but a single pivot will not prevent rotation about that pivot, fixing the locations of two non-colinear pivots will prevent rotation about either pivot.

The means 62, 70, 74 for immobilizing the grapple assembly 42 can assume embodiments other than that considered the best mode. For example, the grapple-boom connection 52 could be a pin-type pivot (as shown in Figs. 1 and 2) with means added for selectively increasing the friction between the pin and the two members connected to it to the point where no rotation is possible under the loadings anticipated.

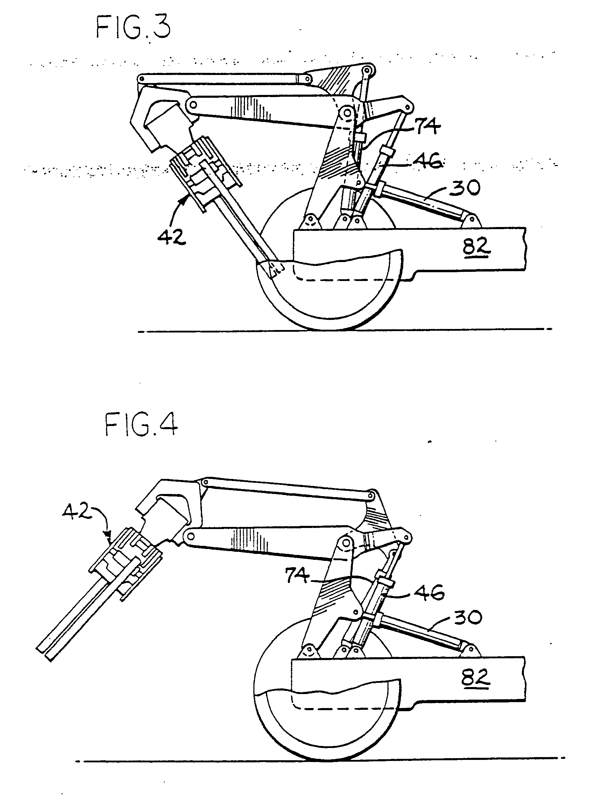

Operation of the load control mechanism 1 that constitutes the advance of this load skidding vehicle 2 over existing designs is achieved through operation of the control cylinder 74. Controllable rotation of the grapple assembly 42 about its rear pivot point 52 is obtained by increasing or decreasing the length of the control cylinder 74. This causes the central forward pivot point 80, directly attached to the control cylinder 74, to move, respectively, away from or toward the mounting frame 20. This serves to rotate the equalizing link 70 about the pivot point 68 respectively toward or away from the grapple assembly 42. This forces the connecting member 62 to move rearwardly or forwardly, respectively, resulting in rotation of the grapple assembly 42 about the rear pivot 52 toward or away from the skidder 2, respectively. Fig. 3 illustrates the grapple assembly 42 in a forwardly rotated position resulting from extending the control cylinder 74. Fig. 4 illustrates the grapple 42 in a rearwardly rotated position resulting from retracting the control cylinder 74.

Once the grapple assembly 42 has been rotated to the desired angle it may be locked in position. With the boom assembly 26 locked (achieved by locking the arch cylinders 30 and also, for the parallelogram-type grapple support 29, the boom cylinders 46), locking the control cylinder 74 results in fixing the position of the equalizing link 70 with respect to the load skidding vehicle 2. This immobilizes the position of the pivot point 68 thereby locking the position of the connecting member 62. Once this is done, the locations with reference to the load skidding vehicle 2 of the pivot points 60 and 52 are fixed and consequently the grapple assembly 42 is not free to rotate.

The broad positional flexibility of the grapple assembly 42 is a major feature of the present invention. This is achieved through the combination of the controllable rotation of the grapple assembly 42 about the rear pivot point 52, detailed above, with the up and down fore and aft positioning capabilities of the parallelogram-type grapple support assembly 29, the latter being well known in the art. Fore and aft movement of the grapple assembly 42 is achieved through control of the arch cylinders 30; extending the arch cylinders 30 causes movement of the grapple assembly away from the vehicle 2, while retracting the arch cylinder 30 will result in movement toward the vehicle 2. In the parallelogram-type grapple support assembly 29, the elevation of the grapple assembly 42 is altered through control of the boom cylinders 46. Retraction of the boom cylinders 46 will raise the grapple assembly 42 while extension of the boom cylinders 46 will lower it.

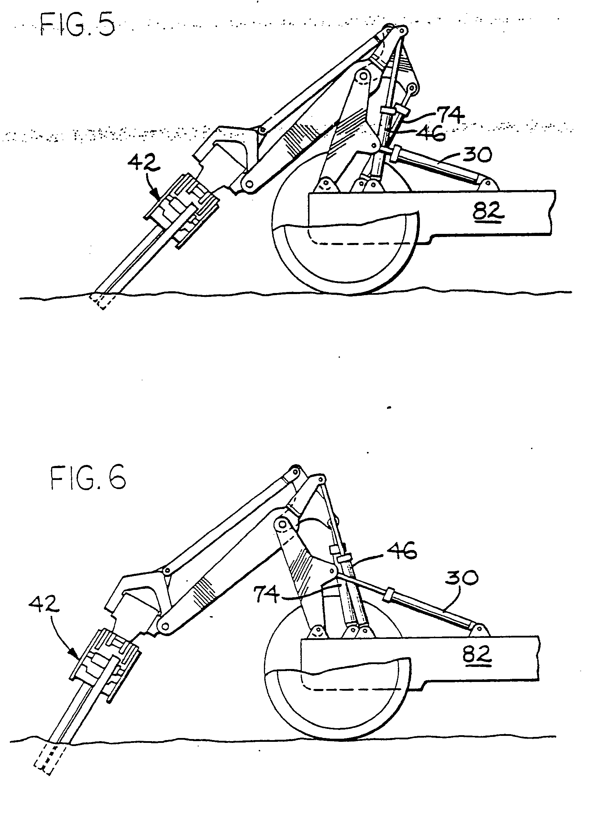

A description of the use of the grapple assembly 42 and grapple support assembly 29 to free the vehicle 2 when mired in mud will serve to illustrate the positional capabilities of the present invention. The following description is applicable to the parallelogram-type grapple support assembly 29. Consider the initial grapple assembly 42-work vehicle 2 orientation shown in Fig. 3, a forwardly rotated upper forward position. This is achieved by retracting both the arch cylinder 30 and the boom ·cylinders 46 while extending the control cylinder 74. From this position, the grapple assembly 42 is rotated away from the vehicle 2 by retracting the control cylinder 74 as illustrated in Fig. 4. Next, the boom cylinders 46 are extended until the grapple assembly 42 is pressed firmly into the mud as shown in Fig. 5. Lastly, using the locked grapple assembly 42 as an anchored point the arch cylinders 30 are extended forcing the grapple assembly 42 to move rearwards with respect to the work vehicle 2, or, as is reality, the work vehicle 2 to move forward in relation to the anchored grapple assembly 42. The result is shown in Fig. 6.

The prime advantage of this invention is the improvement it imparts to the load handling characteristics of a load skidding vehicle. This improvement is achieved by grasping the load with the grapple assembly 42, positioning it as near the rear of the vehicle as possible, and locking the grapple assembly 42 in this position. This positioning may be achieved in one of two ways: if the load is sufficiently light the control cylinder 74 and connecting member assembly 62, 58, 70 may be used to rotate the grapple and its load toward the rear of the vehicle; or, with heavier loads, the load control mechanism 1 may be placed in float and the vehicle 2 then backed toward the load until the position of the grapple assembly 42 is as desired at which point the grapple assembly 42 is locked.

A summary of the advantages of the invention detailed in this application over conventional skidders are as follows:

1) For given loading there is improved manoeuverability.

2) The skidder is capable of handling a greater total load.

3) When travelling in a no load situation the grapple can be locked to prevent it from swinging along the direction of the longitudinal axis of the skidder.

4) When the skidder becomes stuck in swampy or muddy areas the grapple assembly can be locked, lowered to the ground and used to push the vehicle forward.

5) In the preferred embodiment of this invention the vertical axis of the grapple can be controllably rotated about the grapple-boom pivot point in the vertical plane passing through the longitudinal axis of the vehicle thereby providing for greater positional flexibility.

6) The load control mechanism 1 when embodied as the parallelogram· linkage described previously maintains an essentially constant grapple orientation so long as the control cylinder 74 is of constant extension.

**Claim**

A log-skidding vehicle having a chassis (16); a support assembly (29) including both a rearwardly projecting boom (40) pivotally mounted at the rear of the chassis about at least one axis (22, 73) extending transversely of the vehicle, and first hydraulic cylinder means (30, 46), whereby the rear end of the boom may be raised or lowered upon actuation of the first hydraulic cylinder means; a grapple assembly (42) depending from the rear end of the boom and having a vertical extender (58) which is pivotally connected thereto about an axis (52) extending transversely of the vehicle, the grapple assembly comprising a pair of arms (56) which are capable of grasping the end of a log lying on the ground and extending rearwardly from the rear end of the vehicle and raising the end of the log upon raising of the rear end of the boom (40) and thereupon of holding the end of the log in a position behind and substantially level with an axle of a rear wheel (18) of the vehicle for skidding; and second hydraulic cylinder means (74, 86) for swinging the grapple assembly to and fro about the pivotal connection (52) to the rear end of the boom (40); the first and second hydraulic cylinder means (30, 46, 74, 86) being hydraulically lockable in position whereby the grapple assembly may be held rigid relatively to the vehicle chassis during skidding; characterized in that the grapple assembly includes a rotator (54) for rotating the arms (56) relatively to the boom (40) about the longitudinal centre line of the pair of arms; and in that the rotator (54), and hence also the arms (56), are pivotally connected, about an axis extending longitudinally of the vehicle, to the vertical extender.

**Revendication**

Véhicule de traînage de bois en grume comportant un châssis (16); un ensemble de support (29) comprenant à la fois un mât de charge (40) faisant saillie vers l'arrière et monté sur l'arrière du châssis de manière à pouvoir pivoter autour d'au moins un axe (22, 73) s'étendant suivant la direction transversale du véhicule, et des premiers moyens formant vérins hydrauliques (30, 46), ce qui permet de relever ou d'abaisser l'extrémité arrière du mât de charge lors de l'actionnement des premiers moyens formant vérins hydrauliques; un ensemble formant grappin (42) qui est suspendu à l'extrémité arrière du mât de charge et possède un dispositif vertical de déploiement (58) qui est raccordé à cette extrémité de façon à pouvoir pivoter autour d'un axe (52) s'étendant suivant la direction transversale du véhicule, l'ensemble formant grappin comportant un couple de bras (56) qui peuvent saisir l'extrémité d'un bois en grume situé sur le sol et s'étendre vers l'arrière à partir de l'extrémité arrière du véhicule et relever l'extrémité du bois en grume lors du relèvement de l'extrémité arrière du mât de charge (40) et retenir ensuite l'extrémité du bois en grume dans une position située en arrière d'un essieu d'une roue arrière (18) du véhicule de traînage et essentiellement de niveau avec cet essieu; et des seconds moyens formant vérins hydrauliques (74, 86) permettant de faire pivoter l'ensemble formant grappin en va-et-vient autour de la liaison pivotante (52) avec l'extrémité arrière du mât de charge (40); les premiers et seconds moyens formant vérins hydrauliques (30, 46, 74, 86) pouvant être bloqués en position par voie hydraulique, ce qui a pour effet que l'ensemble formant grappin peut être maintenu rigidement par rapport au châssis du véhicule pendant le traînage; caractérisé en ce que l'ensemble formant grappin comporte un dispositif (54) d'entraînement en rotation permettant de faire tourner les bras (56) par rapport au mât de charge (40) autour de l'axe central longitudinal du couple des bras; et en ce que le dispositif (54) d'entraînement en rotation, et par conséquent également les bras (56), sont raccordés au dispositif vertical de déploiement, de manière à pouvoir tourner autour d'un axe s'étendant suivant la direction longitudinale du véhicule.

**Patentanspruch**

Ein Lasten-Verholfahrzeug welches folgendes aufweist: ein Chassis (16), eine Traganordnung (29) mit sowohl einem nach hinten ragendem Ausleger (40) schwenkbar angeordnet an der Rückseite des Chassis um mindestens eine sich quer zur Fahrzeug erstreckende Achse (22, 73) und erste hydraulische Zylindermittel (30, 46), wodurch das hintere Ende des Auslegers bei Betätigung der ersten hydraulischen Zylindermittel angehoben oder abgesenkt werden kann, eine vom hinteren Ende des Auslegers herabhängende Greifanordnung (42) mit Vertikalverlängerungsmitteln (58) schwenkbar damit verbunden, und zwar um eine Achse (52) herum, die sich quer zum Fahrzeug erstreckt, wobei die Greifanordnung ein Paar von Armen (56) aufweist, die in der Lage sind das Ende eines auf der Erde liegenden Baumstammes zu erfassen und die sich nach hinten vom hinteren Ende des Fahrzeugs aus erstrecken und das Ende des Stammes beim Anheben des hinteren Endes des Auslegers (40) anheben und darauf das Ende des Stammes in einer Position hinter und im wesentlichen auf dem gleichen Niveau mit einer Achse des Hinterrades (18) des Fahrzeugs zum Schleifen halten, und zweite hydraulische Zylindermittel (74, 86) zum Schwingen der Greifanordnung hin und her um eine Schwenkverbindung (52) am hinteren Ende des Auslegers (40), wobei die ersten und zweiten hydraulischen Zylindermittel (30, 46, 74, 86) hydraulisch in ihrer Position verriegelbar sind, wodurch die Greifanordnung starr während des Gleitens bezüglich des Fahrzeugschassis gehalten werden kann, dadurch gekennzeichnet, daß die Greifanordnung Rotationsmittel (54) aufweist, um die Arme bezüglich des Auslegers (40) um die Längsmittellinie des Paares der Arme zu drehen, und daß die Rotationsvorrichtung (54) und somit die Arme (56) schwenkbar um eine sich längs des Fahrzeugs erstreckende Achse mit den Vertikalverlängerungsmitteln verbunden sind.

FIG.1

FIG.2

0 058 165

FIG.3

74
46
30
42
82

FIG.4

42
74
46
30
82

FIG. 5

FIG. 6

3

FIG 7

FIG 8